# EUROPÄISCHE PATENTSCHRIFT

(11) **EP 0 992 416 B1**
(45) Veröffentlichungstag und Bekanntmachung des Hinweises auf die Patenterteilung: **28.04.2004**
(21) Anmeldenummer: 99119153.7
(22) Anmeldetag: 06.10.1999
(51) Int. Cl.: B62D 1/06

(54) **Belüftetes Lenkrad**
Ventilated steering wheel
Volant de direction ventilé

(30) Priorität: 06.10.1998 DE 29817868 U
(43) Veröffentlichungstag der Anmeldung: 12.04.2000
(73) Patentinhaber: TRW Automotive Safety Systems GmbH, 63743 Aschaffenburg (DE); DaimlerChrysler AG, 70567 Stuttgart (DE)
(72) Erfinder: Wissel, Willi, 63825 Blankenbach (DE)
(74) Vertreter: Degwert, Hartmut, Dipl.-Phys.

(56) Entgegenhaltungen:
- EP-A- 0 849 127
- EP-A- 0 989 045
- FR-A- 2 364 801
- US-A- 1 615 635
- US-A- 2 163 450
- PATENT ABSTRACTS OF JAPAN vol. 011, no. 348 (M-642), 14. November 1987 (1987-11-14) -& JP 62 128879 A (TOYODA GOSEI CO LTD), 11. Juni 1987 (1987-06-11)

## Beschreibung

Die Erfindung betrifft eine Einrichtung zur Belüftung eines Lenkrades, insbesondere im Griffbereich des Lenkradkranzes durch Zufuhr von Luft über ein Kanalsystem zum Lenkradkranz und Ausströmen der Luft durch eine Vielzahl von über den Lenkradkranz verteilter Austrittsöffnungen.

Aus der DE 21 64 976 A1 ist eine Einrichtung zum Erwärmen oder Kühlen von Fahrzeuglenkrädern bekannt geworden, bei der über ein im Lenkrad und in der Lenksäule ausgebildetes Kanalsystem aus einer im Fahrzeug vorhandenen Warm- oder Kühlluftquelle Luft in den Bereich des Lenkradkranzes und der Lenkradspeichen geführt und über eine Vielzahl von Öffnungen ausgeblasen wird. Die Verbindung des Luftleitsystems im Lenkrad und in der Lenksäule mit der Warm- bzw. Kaltluftquelle des Fahrzeugs erfolgt über ein Zweiwegeventil. Die bekannte Einrichtung zum Erwärmen oder Kühlen des Lenkrades ist verhältnismäßig aufwendig von den vorhandenen Warm- und Kühlluftquellen des Fahrzeuges abhängig und schränkt insbesondere im Bereich des Lenkrades die Gestaltungsmöglichkeiten ein, weil ein durchgängiges Kanalsystem mit einer im Lenkradkranz umlaufenden unteren Nut vorgesehen werden muß, um die Luft möglichst gleichmäßig verteilen zu können. Außerdem ist aus der DE 21 64 976 A1 nicht ersichtlich, ob und ggf. wie im Lenkradkranz und in den Lenkradspeichen ein mechanisch tragendes Skelett gleichzeitig mit dem Luftführungssystem realisiert werden kann.

Aus dem Deutschen Gebrauchsmuster 9204354 ist eine Lenkeinrichtung für Kraftfahrzeuge bekannt geworden, bei der das eigentliche Lenkrad einen Tragkörper mit einer griffigen Ummantelung aufweist und mit einem Lenkrohr verbunden ist. Im Bereich des Tragkörpers ist eine Temperiereinrichtung vorgesehen, die auf die Ummantelung einwirkt und über das Lenkrohr mit Energie versorgt wird. Gemäß einer Ausführungsform soll die Temperierung des Lenkrades über die Klimaanlage oder Lüftung des Fahrzeuges von innen erfolgen. Dazu sind am Lenkrad Lüftungslöcher vorgesehen, die über das Lenkrohr mit der Lüftung oder der Klimaanlage des Fahrzeuges verbunden sind. Soweit diese Lenkeinrichtung mittels erwärmter oder gekühlter Luft temperiert werden soll, weist sie die gleichen Nachteile auf, wie die aus der DE 21 64 976 A1 bekannte Einrichtung. Wie die Trageinrichtung und die Ummantelung bei derartig temperierten Lenkrädern ausgeführt werden soll und wie das erforderliche Luftleitsystem in das Lenkrad integriert werden kann, ist dem Deutschen Gebrauchsmuster 9204354 nicht zu entnehmen.

In der FR-A-2 364 801 ist ein belüftbares Lenkrad gezeigt, das einen sich durch die Lenkradachse und die Speichen verlaufenden Luftzufuhrkanal sowie einen im Lenkradkranz ausgebildeten Luftleitkanal aufweist. Am Eingang des Luftzufuhrkanals ist ein Lüfter vorgesehen.

In der EP-A-0 849 127 ist ein Lenkrad gezeigt, das ein Lenkradskelett mit Nabenbereich, Speichen und Lenkradkranz aufweist. Das Lenkradskelett wird im montierten Zustand des Lenkrads von einer Oberschale und einer Unterschale abgedeckt. Die Ober- und Unterschale sind mittels Schrauben miteinander verbunden.

In der JP-A-62128879 ist ein belüftbares Lenkrad gezeigt, bei dem in die Umkleidung einer Lenkradspeiche ein Luitzufuhrkanal integriert ist, an dessen Eingang ein Ventilator angeordnet ist. Der Ventilator befindet sich am der Lenkradnabe zugewandten Ende der Lenkradspeiche.

In der US-A-1,615,635 ist ein beheizbares Lenkrad gezeigt, dessen Lenkradkranz durch zwei Halbschalen 10, 11 gebildet ist, die randseitig miteinander verbunden und relativ zum tragenden Skelett des Lenkrads fixiert sind.

In der US-A-2,163,450 ist ein beheizbares Lenkrad gezeigt, dessen Lenkradkranz durch zwei Halbschalen gebildet ist, die randseitig miteinander verbunden sind. Die untere Halbschale ist so ausgebildet, daß sie bereichsweise die Speichen des Lenkrades umfaßt.

In der EP-A-0 989 045, die am 29.03.2000 veröffentlicht wurde und als Stand der Technik gemäß Artikel 54(3) EPÜ gilt, ist eine Einrichtung zur Belüftung eines Lenkrades durch Zufuhr von Luft über ein Kanalsystem zum Lenkradkranz und Ausströmen der Luft durch eine Vielzahl von über den Lenkradkranz verteilten Austrittsöffnungen gezeigt, wobei das Lenkrad zwei Halbschalen aufweist, die randseitig miteinander verbunden sind und die einen Luftkanal bilden, der eine Lufteintrittsöffnung und eine Vielzahl von Luftauslaßöffnungen aufweist. Die Halbschalen weisen jeweils einen Schalenabschnitt auf, die als Aufnahmeflansch für ein Lüftermodul dienen.

Es besteht somit die Aufgabe, bei einer Einrichtung der eingangs genannten Art anzugeben, wie das Luftleitsystem, insbesondere im Bereich des Lenkradkranzes ausgebildet werden kann, um eine wirksame Luftverteilung erreichen zu können, ohne daß bei den übrigen Funktionen des Lenkrades Nachteile in Kauf genommen werden müssen. Außerdem soll das belüftete Lenkrad auf den gebräuchlichen Lenkradfertigungsstraßen ohne nennenswerte Mehrkosten herstellbar sein.

Zur Lösung dieser Aufgabe wird gemäß einem ersten Erfindungsgedanken vorgeschlagen, den Lenkradkranz und die Übergangsbereiche zu den Lenkradspeichen durch zwei Halbschalen zu bilden, die randseitig miteinander verbunden sowie relativ zum tragenden Skelett des Lenkrades fixiert sind und die einen Luftleitkanal bilden, der wenigstens eine Lufteintrittsöffnung und eine Vielzahl von Luftauslaßöffnungen aufweist.

Die zwei Halbschalen umschließen in den Übergangsbereichen zu den Lenkradspeichen das Skelett, wobei die Übergangsbereiche der zwei Halbschalen so ausgebildet sind, daß sie die Lufteintrittsöffnung aufnehmen können und einen in den Luftleitkanal übergehenden Luftzufuhrkanal bilden, und wobei in die Lufteintrittsöffnung ein Ventilator eingesetzt ist.

Zur Lösung dieser Aufgabe wird gemäß einem zweiten Erfindungsgedanken vorgeschlagen, den Lenkradkranz und die Übergangsbereiche zu den Lenkradspeichen durch zwei Halbschalen zu bilden, die randseitig miteinander verbunden sowie relativ zum tragenden Skelett des Lenkrades fixiert sind und die einen Luftleitkanal bilden, der wenigstens eine Lufteintrittsöffnung und eine Vielzahl von Luftauslaßöffnungen aufweist, wobei eine der beiden Halbschalen einstückig angeformte Lenkradspeichen aufweist, wobei die Übergangsbereiche der zwei Halbschalen zu den Lenkradspeichen so ausgebildet sind, daß sie die Lufteintrittsöffnung aufnehmen können und einen in den Luftleitkanal übergehenden Luftzufuhrkanal bilden, und wobei in die Lufteintrittsöffnung ein Ventilator eingesetzt ist.

Dem liegt die Erwägung zugrunde, daß zur gleichmäßigen und energiesparenden Verteilung eines der Belüftung dienenden Luftstroms ein möglichst kurzer Luftleitkanal mit möglichst großem Strömungsquerschnitt vorgesehen werden muß. Wird der Luftleitkanal gemäß der Erfindung aus zwei Halbschalen gebildet, kann man im Bereich des Lenkradkranzes den größtmöglichen Strömungsquerschnitt verwirklichen und gleichzeitig eine Formgebung realisieren, die auf andere, wichtige Lenkradfunktionen optimal abgestimmt werden kann.

Die Halbschalen können form- und kraftschlüssig miteinander verbunden und mit ergonomisch ausgebildeten Griffmulden versehen werden. Zusammen mit dem Lenkradskelett können alle Anforderungen hinsichtlich Festigkeit und Unfallsicherheit optimal erfüllt werden, ohne daß der Herstellungsvorgang kompliziert oder verteuert wird.

Andere Ausgestaltungsformen und Abwandlungen des Erfindungsgedankens sind in den Unteransprüchen 4 bis 14 beschrieben. Weitere Einzelheiten werden anhand der in den Figuren 1 bis 6 dargestellten Ausführungsbeispielen näher erläutert. Es zeigen:
Figur 1 eine erste Ausführungsform des Erfindungsgedankens mit auseinandergezogen dargestellten Einzelteilen
Figur 2 die Ausführungsform gemäß Figur 1 in zusammengesetzter Form
Figur 3 eine zweite Ausführungsform des Erfindungsgedankens mit auseinandergezogen dargestellten Bauteilen
Figur 4 die Ausführungsform gemäß Figur 3 in zusammengesetztem Zustand
Figur 5 einen Schnitt durch eine Ausführungsform gemäß Figuren 1 und 2
Figur 6 einen Schnitt durch eine Ausführungsform gemäß Figuren 3 und 4.

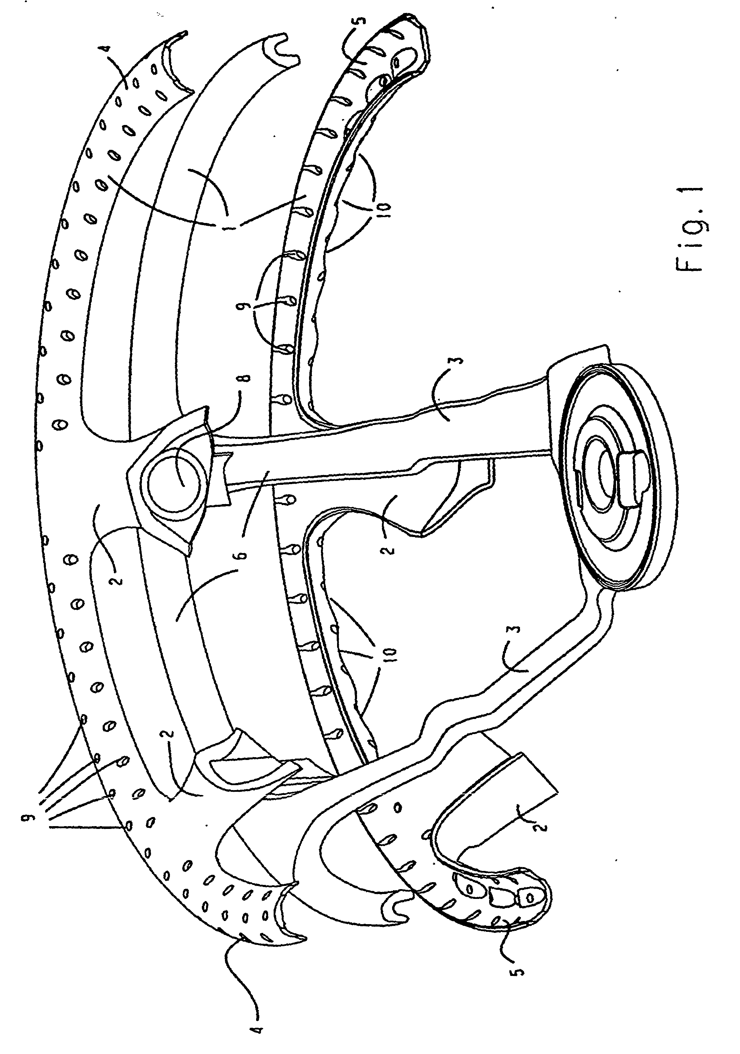

In den Figuren 1 bis 6 bezeichnen die Bezugsziffern 1 bis 13 die folgenden Bauteile:
- 1: Lenkradkranz
- 2: Übergangsbereich
- 3: Lenkradspeichen
- 4: Halbschale
- 5: Halbschale
- 6: Skelett
- 7: Luftleitkanal
- 8: Lufteintrittsöffnung
- 9: Luftauslaßöffnung
- 10: Griffmulde
- 11: Gewebe
- 12: Luftzufuhrkanal
- 13: Ventilator
- 14: Lenkradummantelung

Wie aus Figur 1 ersichtlich, besteht der Lenkradkranz 1 mit den Übergangsbereichen 2 zu den Lenkradspeichen 3 aus einer oberen Halbschale 4 und einer unteren Halbschale 5, die zusammen mit dem Lenkradskelett 6 die mechanisch tragenden Teile des Lenkrades bilden und gleichzeitig einen Luftleitkanal 7 ergeben, über den durch eine Lufteintrittsöffnung 8 eingebrachte Luft zu einer Vielzahl von Luftauslaßöffnungen 9 weitergeleitet und ausgeblasen werden kann. Die beiden Halbschalen 4 und 5 sind dabei so ausgebildet, daß sie randseitig miteinander verbunden und am tragenden Skelett befestigt werden können. Die Übergangsbereiche sind so ausgebildet, daß sie wenigstens eine Lufteintrittsöffnung 8 aufnehmen können und querschnittsmäßig an die üblicherweise vorhandene Umschäumung der Lenkradspeichen angepaßt sind. Die Formgebung der Halbschalen erfolgt im übrigen im Hinblick auf die verschiedenen Lenkradfunktionen, wobei ohne weiteres auch ergonomisch ausgebildete Griffmulden 10, insbesondere im Bereich der unteren Halbschale 5 in Betracht kommen.

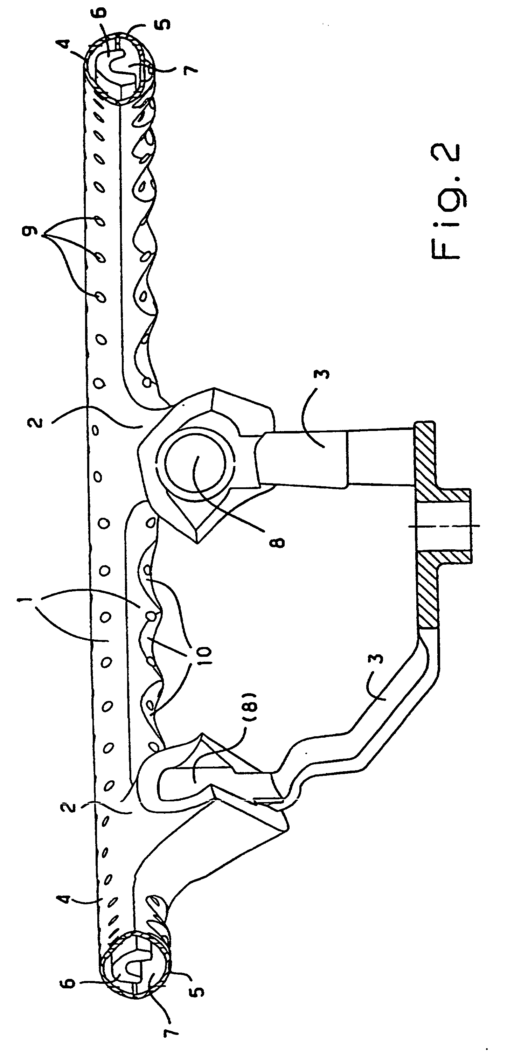

Aus Figur 2 ist ersichtlich, daß die zusammengesetzten Halbschalen 4 und 5 das Skelett des Lenkrades umschließen und daß sie einen Luftleitkanal 7 bilden, der mindestens eine Lufteintrittsöffnung 8 aufweist. An der im Bild links dargestellten Speiche 3 ist mit (8) ein Verschluß angedeutet, durch die der Luftleitkanal 7 in den Übergangsbereichen 2 zu den Lenkradspeichen 3 verschlossen ist, in denen keine Lufteintrittsöffnung 8 vorgesehen ist. Die übrigen Bezugsziffern haben die gleiche Bedeutung wie in Figur 1 und bedürfen keiner weiteren Erläuterung.

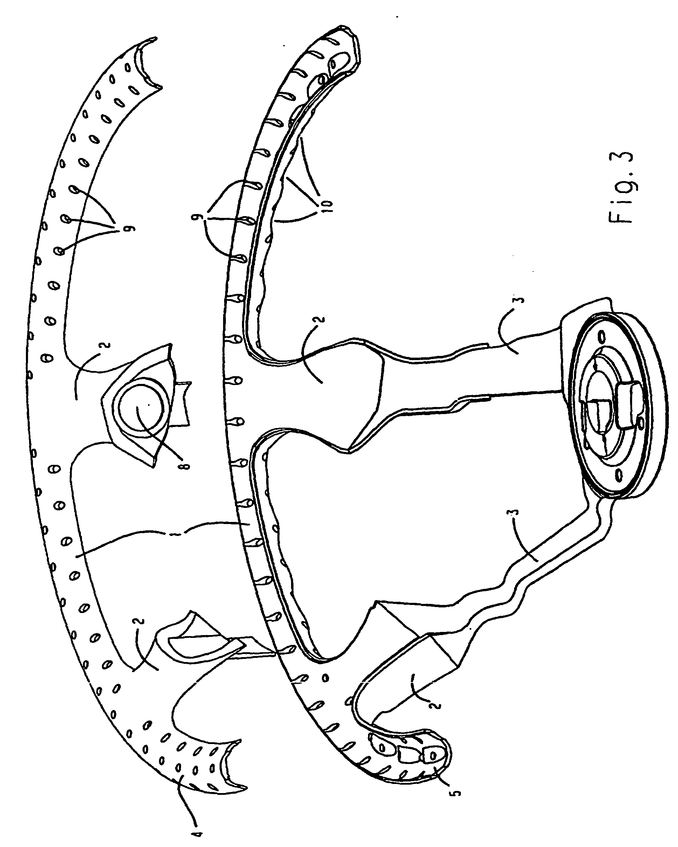

In Figur 3 ist eine Ausführungsform des Erfindungsgedankens dargestellt, bei der die untere Halbschale 5 mit Übergangsbereichen 2 und Lenkradspeichen 3 im Druckgußverfahren einteilig aus einer geeigneten Leichtmetallegierung hergestellt ist. Die obere Halbschale 4 kann ebenfalls aus einer durch Druckgießen verarbeiteten Leichtmetallegierung bestehen oder aber aus einem durch Spritzgießen verarbeiteten thermoplastischen Kunststoff. Die Formgebung der oberen Halbschale 4 unterscheidet sich nicht von derjenigen gemäß Figur 1 und 2. Auch die Formgebung der unteren Halbschale 5 mit ergonomisch ausgebildeten Griffmulden 10 unterscheidet sich nicht von derjenigen gemäß Figur 1 und 2. Bei einer derartigen Ausführungsform entfällt im Kranzbereich selbstverständlich ein gesondertes, tragendes Skelett 6, weil insoweit alle mechanischen Funktionen von den miteinander randseitig verbundenen Halbschalen 4 und 5 in Verbindung mit den einstückig angeformten Speichen 3 übernommen werden. Dementsprechend sind auch die Lufteintrittsöffnung 8 und die Luftauslaßöffnungen 9 wie in Figur 1 und 2 ausgebildet.

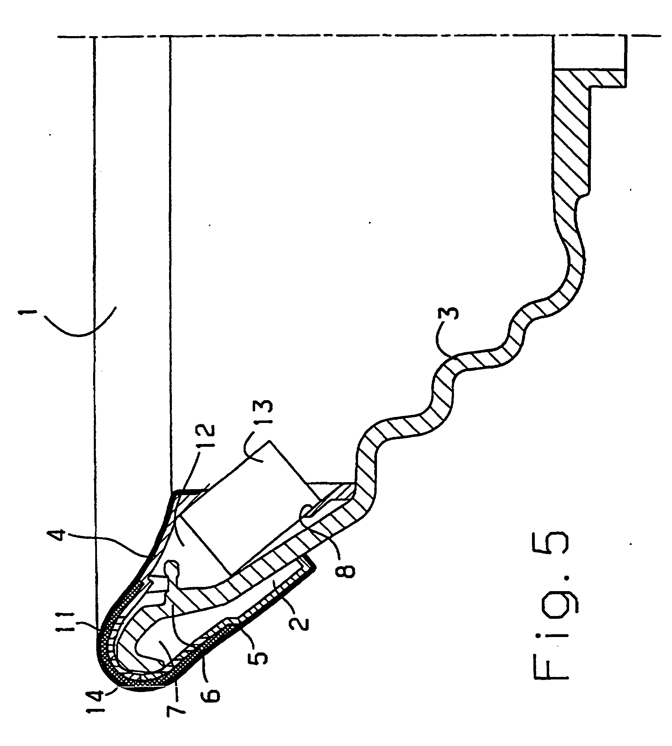

Aus der Schnittdarstellung gemäß Figur 5 ist ersichtlich, wie ein Ventilator 13 in die Lufteintrittsöffnung 8 der oberen Halbschale 4 eingesetzt ist. Im Übergangsbereich 2 vom Lenkradkranz 1 zu den Lenkradspeichen 3 bilden die Halbschalen 4 und 5 einen integrierten Luftzufuhrkanal 12, der in den Luftleitkanal übergeht. Die Halbschalen 4 und 5 umfassen das Skelett 6 und sind auf diesem bzw. den zum Skelett gehörenden Speichen 3 derart abgestützt, daß sie mit dem Lenkradskelett eine mechanische Einheit bilden, die allen im Kraftfahrzeugbetrieb vorkommenden Beanspruchungen des Lenkrades genügt. Die Halbschalen 4 und 5 sind mit einem luftdurchlässigen Gewebe 11 überzogen, das außen von einer üblichen Lenkradummantelung 14 aus Kunststoff, Leder oder dergl. abgedeckt ist. Diese Ummantelung ist wie das Gewebe 11 luftdurchlässig auszubilden.

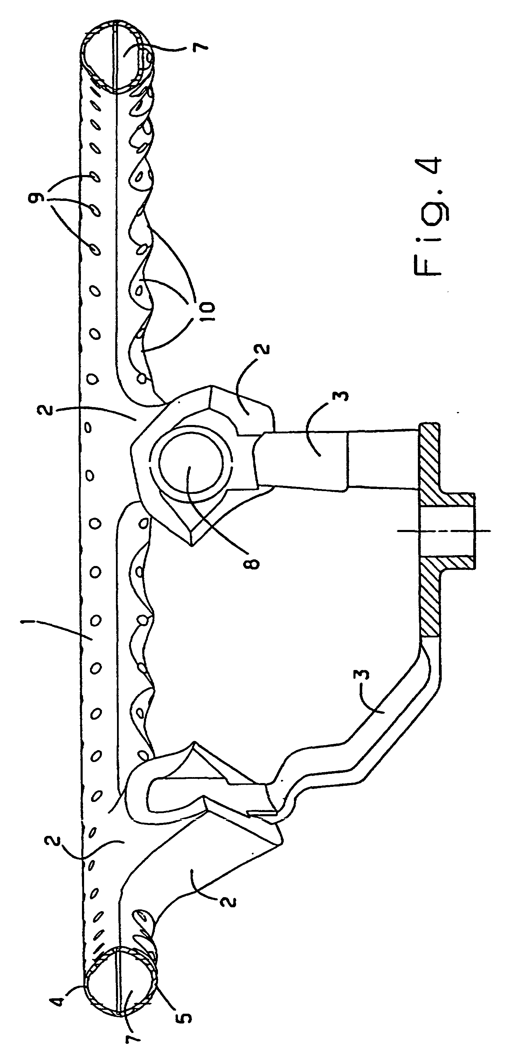

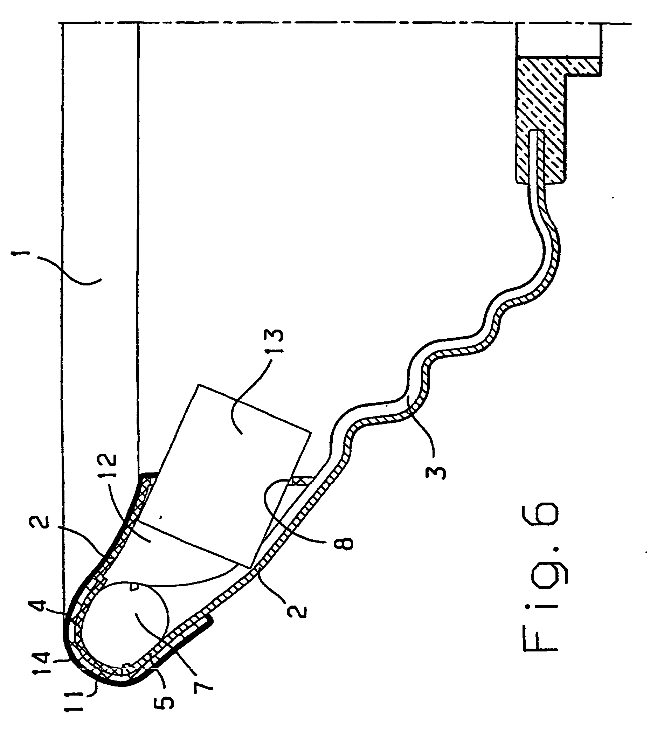

Figur 6 zeigt die Unterbringung eines Ventilators 13 im Übergangsbereich 2 zwischen Lenkradkranz 1 und Speichen 3 der oberen Halbschale 4 bei einer Ausführungsform gemäß Figur 3 und 4, bei der die untere Halbschale 5 einteilig mit einem durch Druckgießen aus einer Leichtmetallegierung hergestellten Lenkradskelett 6 ausgebildet ist. Alternativ kann die untere Halbschale 4 auch einteilig mit einem aus Blech hergestellten Lenkradskelett ausgebildet werden, an das ein Nabenbereich gießtechnisch angeformt ist.

Wie bei der Ausführungsform gemäß Figur 5 schließt sich an den Ventilator 13 ein Luftzufuhrkanal 12 an, der in den Luftleitkanal 7 übergeht. Die Halbschalen 4 und 5 sind mit einem luftdurchlässigen Gewebe 11 überzogen, auf das außen noch eine übliche, nicht näher bezeichnete Lenkradummantelung 14 aus Kunststoff, Leder oder dergl. aufgebracht ist.

Die in den Figur 5 und 6 dargestellten Ausführungsbeispiele haben den Vorteil, daß nur ein sehr kurzes Luftleitsystem erforderlich ist und daß daher die Strömungsverluste minimiert werden können. Je nach dem, welche Luftmengen durchgesetzt werden sollen, wird entweder nur eine Lufteintrittsöffnung 8 mit einem einzigen Ventilator 13 vorgesehen, und es werden alle anderen Übergangsbereiche 2 vom Lenkradkranz 1 zu den Lenkradspeichen 3 verschlossen. Falls mit einem Ventilator 13 keine ausreichende Luftmenge gefördert werden kann, können auch zwei oder mehr Ventilatoren 13 vorgesehen werden. Wenn es die Einbauverhältnisse zulassen, kann man auch einen zentralen Ventilator vorsehen und über einen oder mehrere längs der Lenkradspeichen angeordnete Luftzufuhrkanäle die erforderliche Menge in den Luftleitkanal 7 einbringen. Maßgebend ist nur, daß zwei, den Lenkradkranz 1 und die Übergangsbereiche 2 zu den Lenkradspeichen 3 umfassende Halbschalen 4, 5 vorgesehen werden, die randseitig miteinander verbunden sind und die den Luftleitkanal 7 bilden.

## Patentansprüche

1. Einrichtung zur Belüftung eines Lenkrades, insbesondere im Griffbereich des Lenkradkranzes durch Zufuhr von Luft über ein Kanalsystem zum Lenkradkranz und Ausströmen der Luft durch eine Vielzahl von über den Lenkradkranz verteilten Austrittsöffnungen, mit zwei den Lenkradkranz (1) und die Übergangsbereiche (2) zu den Lenkradspeichen (3) umfassende Halbschalen (4, 5), die randseitig miteinander verbunden sowie relativ zum tragenden Skelett (6) des Lenkrades fixiert sind und einen Luftleitkanal (7) bilden, der wenigstens eine Lufteintrittsöffnung (8) und eine Vielzahl von Luftauslaßöffnungen (9) aufweist, wobei die zwei Halbschalen (4, 5) in den Übergangsbereichen (2) zu den Lenkradspeichen (3) das Skelett (6) umschließen, wobei die Übergangsbereiche (2) der zwei Halbschalen (4, 5) so ausgebildet sind, daß sie die Lufteintrittsöffnung (8) aufnehmen können und einen in den Luftleitkanal (7) übergehenden Luftzufuhrkanal (12) bilden, und wobei in die Lufteintrittsöffnung (8) ein Ventilator (13) eingesetzt ist.

2. Einrichtung nach Anspruch 1, **dadurch gekennzeichnet, daß** die Halbschalen (4, 5) aus einem thermoplastisch verarbeitbaren Kunststoff bestehen.

3. Einrichtung nach Anspruch 2, **dadurch gekennzeichnet, daß** die Halbschalen (4, 5) durch Spritzgießen hergestellt sind.

4. Einrichtung zur Belüftung eines Lenkrades, insbesondere im Griffbereich des Lenkradkranzes durch Zufuhr von Luft über ein Kanalsystem zum Lenkradkranz und Ausströmen der Luft durch eine Vielzahl von über den Lenkradkranz verteilten Austrittsöffnungen, mit zwei den Lenkradkranz (1) und die Übergangsbereiche (2) zu den Lenkradspeichen (3) umfassende Halbschalen (4, 5), die randseitig miteinander verbunden sowie relativ zum tragenden Skelett (6) des Lenkrades fixiert sind und einen Luftleitkanal (7) bilden, der wenigstens eine Lufteintrittsöffnung (8) und eine Vielzahl von Luftauslaßöffnungen (9) aufweist, wobei eine der beiden Halbschalen (5) einstückig angeformte Lenkradspeichen (3) aufweist, wobei die Übergangsbereiche (2) der zwei Halbschalen (4, 5) zu den Lenkradspeichen (3) so ausgebildet sind, daß sie die Lufteintrittsöffnung (8) aufnehmen können und einen in den Luftleitkanal (7) übergehenden Luftzufuhrkanal (12) bilden, und wobei in die Lufteintrittsöffnung (8) ein Ventilator (13) eingesetzt ist.

5. Einrichtung nach Anspruch 4, **dadurch gekennzeichnet, daß** das Lenkradskelett (6) aus Blech geformt ist.

6. Einrichtung nach Anspruch 4, dadurch gekenzeichnet, daß das Lenkradskelett (6) im Druckgußverfahren hergestellt ist.

7. Einrichtung nach einem der Ansprüche 1 bis 6, **dadurch gekennzeichnet, daß** die Halbschalen (4, 5) form- und kraftschlüssig miteinander verbunden sind.

8. Einrichtung nach einem der Ansprüche 1 bis 7, **dadurch gekennzeichnet, daß** die Halbschalen (4, 5) mit ergonomisch ausgebildeten Griffmulden (10) versehen sind.

9. Einrichtung nach einem der Ansprüche 1 bis 8, **dadurch gekennzeichnet, daß** die Halbschalen (4, 5) ganz oder teilweise mit einem luftdurchlässigen Gewebe (11) oder dergl. bedeckt sind.

10. Einrichtung nach Anspruch 9, **dadurch gekennzeichnet, daß** die Halbschalen (4, 5) mit einem Gewebe (11) oder dergl. umwickelt sind, das beidseitig eine mittels Erwärmung aktivierbare Klebeschicht aufweist.

11. Einrichtung nach einem der Ansprüche 1 bis 10, **dadurch gekennzeichnet, daß** je Lenkradspeiche (3) ein Luftzufuhrkanal (12) und ein Ventilator (13) vorgesehen sind.

12. Einrichtung nach einem der Ansprüche 1 bis 11, **dadurch gekennzeichnet, daß** zumindest der Griffbereich des Lenkrades mit einem fein gelochten Deckmaterial aus Leder oder Kunststoff überzogen ist.

13. Einrichtung nach einem der Ansprüche 1 bis 12, **dadurch gekennzeichnet, daß** in an sich bekannter Weise elektrische Heiz- bzw. Kühlelemente vorgesehen sind, mittels derer die austretende Luft erwärmt bzw. gekühlt werden kann.

## Claims

1. A means for ventilating a steering wheel, in particular in the grip portion of the steering wheel rim, by supplying air via a channel system to the steering wheel rim and escape of the air through a multitude of exit ports distributed over the steering wheel rim, including two half-shells (4, 5) encompassing the steering wheel rim (1) and the transition portions (2) to the steering wheel spokes (3), the half-shells (4, 5) being connected to each other at their rims and fixed in place relative to the supporting skeleton (6) of the steering wheel and forming an air guiding channel (7) having at least one air intake port (8) and a multitude of air outlet ports (9), the two half-shells (4, 5) enclosing the skeleton (6) in the transition portions (2) to the steering wheel spokes (3), the transition portions (2) of the two half-shells (4, 5) being configured such that they can accommodate the air intake port (8) and form an air supply channel (12) merging into the air guiding channel (7), and a fan (13) being inserted in the air intake port (8).

2. The means as set forth in claim 1, **characterized in that** the half-shells (4, 5) are made of a thermoplastically processable plastics material.

3. The means as set forth in claim 2, **characterized in that** the half-shells (4, 5) are made by injection-molding.

4. A means for ventilating a steering wheel, in particular in the grip portion of the steering wheel rim, by supplying air via a channel system to the steering wheel rim and escape of the air through a multitude of exit ports distributed over the steering wheel rim, including two half-shells (4, 5) encompassing the steering wheel rim (1) and the transition portions (2) to the steering wheel spokes (3), the half-shells (4, 5) being connected to each other at their rims and fixed in place relative to the supporting skeleton (6) of the steering wheel and forming an air guiding channel (7) having at least one air intake port (8) and a multitude of air outlet ports (9), one of the two half-shells (5) having integrally molded steering wheel spokes (3), the transition portions (2) of the two half-shells (4, 5) to the steering wheel spokes (3) being configured such that they can accommodate the air intake port (8) and form an air supply channel (12) merging into the air guiding channel (7), and a fan (13) being inserted in the air intake port (8).

5. The means as set forth in claim 4, **characterized in that** the steering wheel skeleton (6) is shaped from sheet metal.

6. The means as set forth in claim 4, **characterized in that** the steering wheel skeleton (6) is made by die-casting.

7. The means as set forth in any of claims 1 to 6, **characterized in that** the half-shells (4, 5) are connected with each other in a force-transmitting, interlocking relationship.

8. The means as set forth in any of claims 1 to 7, **characterized in that** the half-shells (4, 5) are provided with ergonomically formed grip recesses (10).

9. The means as set forth in any of claims 1 to 8, **characterized in that** the half-shells (4, 5) are covered wholly or partly by an air-permeable fabric (11) or the like.

10. The means as set forth in claim 9, **characterized in that** the half-shells (4, 5) are enveloped by a fabric (11) or the like having on both sides a heat-activatable adhesive layer.

11. The means as set forth in any of claims 1 to 10, **characterized in that** an air supply channel (12) and a fan (13) are provided for each steering wheel spoke (3).

12. The means as set forth in any of claims 1 to 11, **characterized in that** at least the grip portion of the steering wheel is covered with a finely perforated covering material of leather or plastics material.

13. The means as set forth in any of claims 1 to 12, **characterized in that** electrical heating or cooling elements are provided in ways and means known per se, by means of which the emerging air may be heated or cooled.

## Revendications

1. Dispositif de ventilation d'un volant de direction, en particulier dans la zone de préhension de la couronne de volant, par amenée d'air via un système de canaux et par échappement de l'air à travers une multitude d'orifices répartis sur la couronne du volant, comportant deux demi-coques (4, 5) qui entourent la couronne de volant (1) et les zones de transition (2) vers les rayons de volant (3), qui sont reliées entre elles au niveau du bord et immobilisées par rapport à l'ossature portante (6) du volant et forment un canal de circulation d'air (7) présentant au moins un orifice d'admission d'air (8) et une multitude d'orifices d'évacuation d'air (9), les deux demi-coques (4, 5) enfermant l'ossature (6) dans les zones de transition (2) vers les rayons de volant (3), les zones de transition (2) des deux demi-coques (4, 5) étant réalisées de telle sorte qu'elles peuvent recevoir l'orifice d'admission d'air (8) et qu'elles forment un canal d'amené d'air se transformant en canal de circulation d'air (7), et un ventilateur (13) étant mis en place dans l'orifice d'admission d'air (8).

2. Dispositif selon la revendication 1, **caractérisé en ce que** les demi-coques (4, 5) sont constituées d'une matière plastique apte au traitement thermoplastique.

3. Dispositif selon la revendication 2, **caractérisé en ce que** les demi-coques (4, 5) sont réalisées par moulage par injection.

4. Dispositif de ventilation d'un volant de direction, en particulier dans la zone de préhension de la couronne de volant, par amenée d'air via un système de canaux et par échappement de l'air à travers une multitude d'orifices répartis sur la couronne du volant, comportant deux demi-coques (4, 5) qui entourent la couronne de volant (1) et les zones de transition (2) vers les rayons de volant (3), qui sont reliées entre elles au niveau du bord et immobilisées par rapport à l'ossature portante (6) du volant et forment un canal de circulation d'air (7) présentant au moins un orifice d'admission d'air (8) et une multitude d'orifices d'évacuation d'air (9), une des demi-coques (4, 5) présentant des rayons de volant (3) formés d'un seul tenant, les zones de transition (2) des deux demi-coques (4, 5) vers les rayons de volant (3) étant réalisées de telle sorte qu'elles peuvent recevoir un orifice d'admission d'air (8) et qu'elles forment un canal d'amenée d'air (12) se transformant en un canal de circulation d'air (7), et un ventilateur (13) étant inséré dans l'orifice d'admission d'air (8).

5. Dispositif selon la revendication 4, **caractérisé en ce que** l'ossature de volant (6) est formée en tôle.

6. Dispositif selon la revendication 4, **caractérisé en ce que** l'ossature de volant (6) est formée par procédé de moulage sous pression.

7. Dispositif selon l'une des revendications 1 à 6, **caractérisé en ce que** les demi-coques (4, 5) sont reliées l'une à l'autre par coopération de formes et de forces.

8. Dispositif selon l'une des revendications 1 à 7, **caractérisé en ce que** les demi-coques (4, 5) sont pourvues de cavités de préhension réalisées de façon ergonomique.

9. Dispositif selon l'une des revendications 1 à 8, **caractérisé en ce que** les demi-coques (4, 5) sont revêtues entièrement ou partiellement d'un tissu (11) ou analogue perméable à l'air.

10. Dispositif selon la revendication 9, **caractérisé en ce que** les demi-coques (4, 5) sont enveloppées d'un tissu (11) ou analogue pourvu sur ses deux faces d'une couche adhésive activable par chauffage.

11. Dispositif selon l'une des revendications 1 à 10, **caractérisé en ce qu'**il est prévu un canal d'amenée d'air (12) et un ventilateur (13) pour chaque rayon de volant (3).

12. Dispositif selon l'une des revendications 1 à 11, **caractérisé en ce qu'**au moins la zone de préhension du volant est revêtue d'un matériau de recouvrement finement perforé, en cuir ou en matière plastique.

13. Dispositif selon l'une des revendications 1 à 12, **caractérisé en ce que**, de manière connue en soi, il est prévu des éléments électriques de chauffage et de refroidissement qui permettent de chauffer et de refroidir l'air sortant, respectivement.
